(19) Europäisches Patentamt
European Patent Office
Office européen des brevets

(11) Veröffentlichungsnummer : **0 137 241**
**B1**

(12) **EUROPÄISCHE PATENTSCHRIFT**

(45) Veröffentlichungstag der Patentschrift : **21.01.87**

(51) Int. Cl.[4] : **C 07 F 9/54**

(21) Anmeldenummer : **84109892.4**

(22) Anmeldetag : **20.08.84**

(54) **Verfahren zur Herstellung von Hydroxybenzylphosphoniumsalzen.**

(30) Priorität : **27.08.83 DE 3331008**

(43) Veröffentlichungstag der Anmeldung : **17.04.85 Patentblatt 85/16**

(45) Bekanntmachung des Hinweises auf die Patenterteilung : **21.01.87 Patentblatt 87/04**

(84) Benannte Vertragsstaaten : **BE CH DE FR GB LI**

(56) Entgegenhaltungen :
**DE-A- 1 618 741**
**DE-A- 2 537 072**
**DE-B- 1 203 264**
**DE-C- 1 046 046**

(73) Patentinhaber : **BASF Aktiengesellschaft**
**Carl-Bosch-Strasse 38**
**D-6700 Ludwigshafen (DE)**

(72) Erfinder : **Reuther, Wolfgang, Dr.**
**Am Pferchelhang 16**
**D-6900 Heidelberg (DE)**
Erfinder : **Ruland, Alfred, Dr.**
**Schriesheimer Strasse 11**
**D-6945 Hirschberg (DE)**

**EP 0 137 241 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand dieser Erfindung ist ein Verfahren zur Herstellung von Hydroxybenzylphosphoniumsalzen durch Umsetzung von substituierten Phenolen mit tertiären Phosphinen und Säuren.

Es ist aus DE-OS 28 37 736 bekannt, daß sich 2-Hydroxybenzylphosphoniumsalze aus Methylphenolen herstellen lassen. Dabei wird selektiv eine Methylgruppe in die entsprechende Halogenmethylgruppe übergeführt und diese anschließend mit Triphenylphosphin zum Phosphoniumsalz umgesetzt. Da Phenole jedoch leicht Kernhalogenierungen eingehen, muß vor der Halogenierung die phenolische OH-Gruppe durch Veresterung geschützt werden.

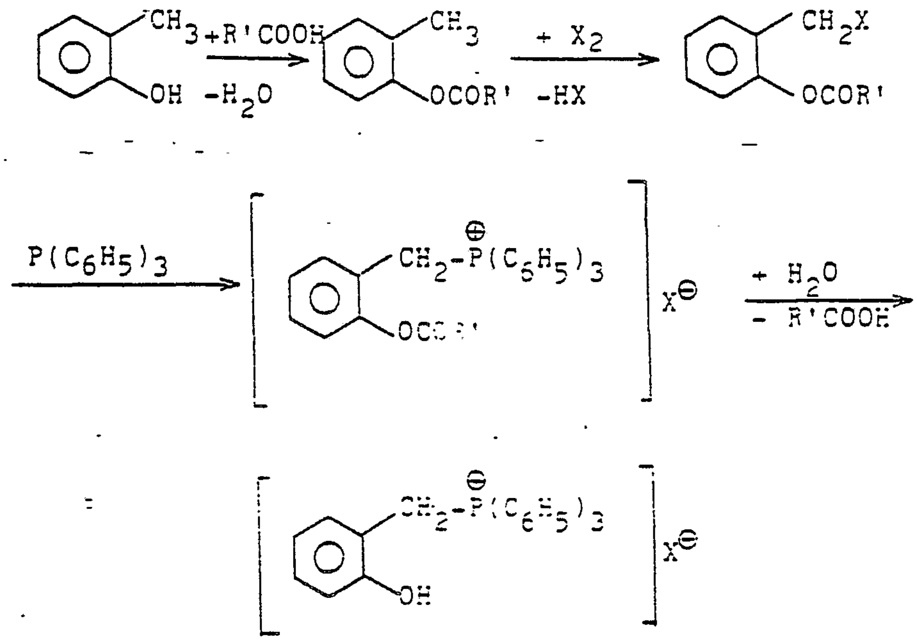


Erst dann kann die Umsetzung mit Triphenylphosphin erfolgen, wobei im abschließenden Reaktionsschritt durch Hydrolyse die Schutzgruppe wieder abgespalten werden muß. Das Verfahren ist im Hinblick auf einfachen und wirtschaftlichen Betrieb, möglichst wenige Verfahrensschritte und gute Raum-Zeit-Ausbeute der Gesamtreaktion unbefriedigend.

Es wurde nun gefunden, daß man Hydroxybenzylphosphoniumsalze der Formel I,

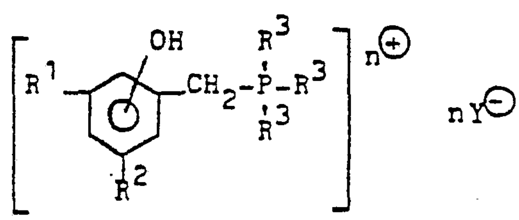

(I)

worin die einzelnen Reste $R^1$, $R^2$ und $R^3$ gleich oder verschieden sein können und jeweils $C_1$-$C_8$-Alkyl, $C_5$ oder $C_6$-Cycloalkyl, $C_7$-$C_{12}$-Aralkyl bzw. Alkylaryl oder Phenyl bedeuten, die unter den Reaktionsbedingungen inerte Substituenten tragen können, $R^1$ und/oder $R^2$ auch jeweils ein Wasserstoffatom, ein Bromatom, ein Chloratom oder den Rest

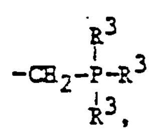

worin $R^3$ die vorgenannte Bedeutung besitzt, bezeichnen, Y für das Anion einer Halogenwasserstoffsäure, Perhalogensäure, Sulfonsäure und/oder der Tetrafluorborsäure steht und n 1, 2 oder 3 bedeutet, durch Umsetzung von Phenolderivaten mit Phosphinen, vorteilhaft erhält, wenn man substituierte Phenole der Formel II,

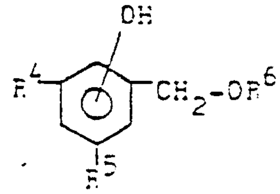

(II)

worin $R^4$ und $R^5$ gleich oder verschieden sein können und jeweils die vorgenannte Bedeutung von $R^1$ und $R^2$ besitzen oder auch, wenn $R^1$ und/oder $R^2$ den Rest

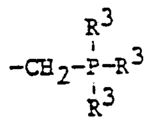

bedeuten, jeweils den Rest $—CH_2—OR^6$ bezeichnen können, $R^6$ für ein Wasserstoffatom oder einen $C_1$-$C_4$-Alkylrest steht, mit tertiären Phosphinen der Formel III,

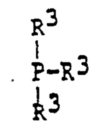

(III)

worin $R^3$ die vorgenannte Bedeutung besitzt, und Säuren der Formel IV,
worin Y die vorgenannte Bedeutung besitzt, umsetzt.

Die Umsetzung läßt sich für den Fall der Verwendung von

1) 2-Hydroxymethyl-4,6-dimethylphenol, Triphenylphosphin und Chlorwasserstoff,

2) 2,6-Dihydroxymethyl-4-methylphenol, Triphenylphosphin und Bromwasserstoff,

durch folgende Formeln wiedergeben :

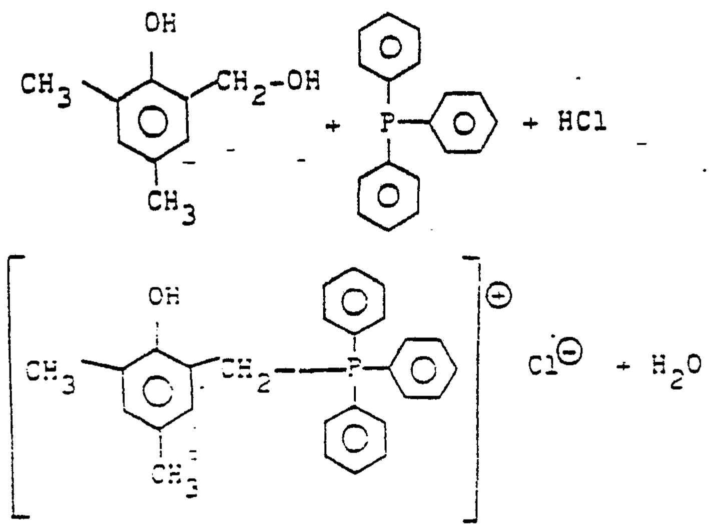

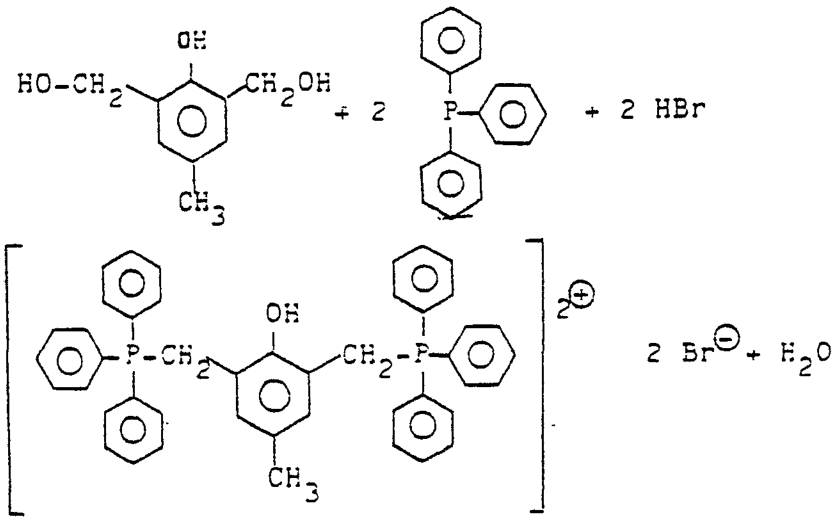

Im Vergleich zu dem bekannten Verfahren liefert das Verfahren nach der Erfindung auf einfacherem und wirtschaftlicherem Wege Hydroxybenzylphosphoniumsalze in guter Ausbeute und Reinheit und in besserer Raum-Zeit-Ausbeute des Gesamtverfahrens. Betriebsoperationen werden eingespart. Alle diese vorteilhaften Ergebnisse sind im Hinblick auf den Stand der Technik überraschend. Man hätte mit Bezug auf die DE-OS 28 37 736 erwartet, daß unter den erfindungsgemäßen Bedingungen keine oder eine wesentlich geringere Umsetzung zwischen dem tertiären Phosphin und dem substituierten Phenol erfolgen würde.

Die Hydroxygruppe kann in ortho-Stellung oder para-Stellung zu der bzw. einer $-CH_2-OR^6$-Gruppe der Ausgangsstoffe II und dementsprechend der oder einer Phosphoniummethylgruppe der Endstoffe I stehen; beispielsweise kommen 2,4-Dimethyl-6-hydroxymethylphenol und 2,6-Dimethyl-4-hydroxymethylphenol als Ausgangsstoffe II in Frage. Die Ausgangsstoffe II können mit den Phosphinen III in stöchiometrischer Menge oder im Überschuß jeder Komponente zu anderen, zweckmäßig in einer Menge von 0,7 bis 1,3, vorzugsweise 0,9 Mol bis 1,1 Mol Phosphin III je Mol Ausgangsstoff II und $-CH_2-OR^6$-Gruppe im Molekül umgesetzt werden.

Nach der erfindungsgemäßen Verfahrensweise können, sofern die 2,4 und/oder 6-Stellung des Phenols II als Substituenten eine $-CH_2-OR^6$-Gruppe tragen, 2-, 6- oder 4-Monophosphoniummethylsalze, 2,6-Di-(phosphoniummethyl)-salze, 2,4-Di-(phosphoniummethyl)-salze und 2,4,6-Tri-(phosphoniummethyl)-salze hergestellt werden, wobei man entsprechend der Zahl der $-CH_2-OR^6$-Gruppen im Molekül entsprechende vorgenannte Mengen an tert. Phosphin III und entsprechende nachgenannte Mengen an Säure der Umsetzung zuführt.

Durch eine entsprechende Einschränkung der Menge an tert. Phosphin III kann man auch Endstoffe herstellen, die nur 1 oder 2 Phosphoniummethylgruppen tragen und deren restlichen 2 oder 1 $-CH_2-OR^6$-Gruppen sich nicht umgesetzt haben. Gegebenenfalls kann man auch zunächst den Ausgangsstoff II herstellen, z. B. durch Umsetzung von Phenolen der Formel V

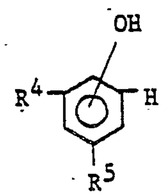

(V)

worin $R^4$ und $R^5$ die vorgenannte Bedeutung besitzen, mit Formaldehyd in alkalischem Medium, z. B. pH 9, und dann nach Zugabe von Phosphin III und Säure IV die erfindungsgemäße Umsetzung durchführen. Zweckmäßig sind Formaldehydmengen von 0,7 bis 1,3, vorzugsweise 0,9 bis 1,1 Mol Formaldehyd je Mol Ausgangsstoff V und $CH_2OR^6$-Gruppe im Ausgangsstoff II. Gegebenenfalls kann man noch zusätzliche Mengen an Säure IV zur Neutralisation des alkalischen Mediums vor oder nach Zugabe des Phosphins III oder zweckmäßig gleichzeitig mit ihm zusetzen. Bei der Herstellung der Ausgangsstoffe II können die für das erfindungsgemäße Verfahren genannten Temperaturen und Lösungsmittel verwendet werden. Ebenfalls können anstelle von Formaldehyd Verbindungen, die unter den Reaktionsbedingungen Formaldehyd bilden, z. B. Paraformaldehyd oder Trioxan, verwendet werden.

Bevorzugte Ausgangsstoffe II, III, IV und V und dementsprechend bevorzugte Endstoffe I sind solche, in deren Formeln die einzelnen Reste $R^1$, $R^2$ und $R^3$ gleich oder verschieden sein können und jeweils einen Alkylrest mit 1 bis 4 Kohlenstoffatomen, einen Cycloalkylrest mit 5 oder 6 Kohlenstoffatomen, einen Aralkylrest oder Alkylarylrest mit 7 bis 12 Kohlenstoffatomen oder einen Phenylrest bedeuten, $R^1$ und/oder $R^2$ auch jeweils ein Wasserstoffatom, ein Bromatom, ein Chloratom oder den Rest

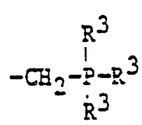

,

worin $R^3$ die vorgenannte Bedeutung besitzt, bezeichnen, $R^4$ und $R^5$ gleich oder verschieden sein können und $R^4$ dem Rest $R^1$ und $R^5$ dem Rest $R^2$ entsprechen oder auch, wenn $R^1$ und/oder $R^2$ den Rest

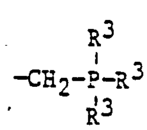

bedeuten, jeweils den Rest $—CH_2—OR^6$ bezeichnen können, $R^6$ für ein Wasserstoffatom oder einen Alkylrest mit 1 bis 3 Kohlenstoffatomen, bevorzugt 2 Kohlenstoffatomen oder insbesondere 1 Kohlenstoffatom steht, n 1, 2 oder 3 bedeutet und Y für das Anion einer Halogenwasserstoffsäure, Perhalogensäure, Sulfonsäure und/oder der Tetrafluorborsäure, bevorzugt der Perchlorsäure, Sulfonsäure, Jod-, Brom- oder Chlorwasserstoffsäure, steht. Die vorgenannten Reste können noch durch unter den Reaktionsbedingungen inerte Gruppen, z. B. Alkylgruppen oder Alkoxygruppen mit jeweils 1 bis 4 Kohlenstoffatomen, substituiert sein.

Beispielsweise sind folgende substituierte Phenole geeignete Ausgangsstoffe II : 2,4-Dimethyl, 2,4-Diethyl, 2,4-Di-n-propyl, 2,4-Diisopropyl, 2,4-Dibutyl, 2,4-Diisobutyl, 2,4-Di-sek.-butyl, 2,4-Di-tert.-butyl, 2,4-Dicyclohexyl, 2,4-Dibenzyl, 2,4-Dichlor, 2,4-Dibrom-6-hydroxymethylphenol ; 2,6-Di-(hydroxymethyl)-, 4,6-Di-(hydroxymethyl)-, 2,4,6-Tri-(hydroxymethyl)-phenol, 6-Hydroxymethylphenol, 4-Hydroxymethylphenol ; in 2- oder 4-Stellung durch Methyl-, Ethyl-, Propyl-, Isopropyl-, Butyl-, Isobutyl-, sek.-Butyl-, tert.-Butyl-, Cyclohexyl-, Benzyl-, Phenylgruppen, Chloratome, Bromatome, substituierte 6-Hydroxymethylphenole, gleichzeitig in 4- oder 2-Stellung unsubstituierte oder durch eine Hydroxymethylgruppe substituierte 6-Hydroxymethylphenole sowie in 2- und 4-Stellung durch zwei vorgenannte, unterschiedliche Gruppen und/oder Atome substituierte 6-Hydroxymethylphenole ; entsprechend den vorgenannten Stoffen in 2-(6) oder 2,6-Stellung substituierte 4-Hydroxymethylphenole ; Verbindungen, die anstelle der Hydroxygruppe an den Methylgruppen eine Methoxy-, Ethoxy-, Propoxy-, Isopropoxy-Gruppe tragen ; bevorzugt 2,6-Di-(hydroxymethyl)-4-tert.-butylphenol, 2,6-Di-(hydroxymethyl)-4-cyclohexylphenol, 2,6-Di-(hydroxymethyl)-phenol, 4-Methoxymethyl-2,6-di-(tert.-butyl)-phenol, 2-Hydroxymethyl-phenol, 6-Methyl-2,4-di(hydroxymethyl)-phenol, 4-Methyl-2,6-di-(hydroxymethyl)-phenol, 2,4,6-Tri-(hydroxymethyl)-phenol, 2,6-Di-(hydroxymethyl)-4-brom-phenol, 2,6-Di-(hydroxymethyl)-4-chlor-phenol, 2,6-Di-(hydroxymethyl)-4-octyl-phenol.

Als Ausgangsstoffe V lassen sich beispielsweise folgende Phenole verwenden : Phenol ; in 2-Stellung oder 4-Stellung einfach oder in 2- und 4-Stellung oder in 2-Stellung und 6-Stellung gleich oder unterschiedlich zweifach durch Methyl-, Ethyl-, Propyl-, Isopropyl-, Butyl-, Isobutyl-, sek.-Butyl-, tert.-Butyl-, Benzyl-, Cyclohexyl-, Phenylgruppen, Chloratome, Bromatome, substituierte Phenole.

Es können z. B. folgende tertiäre Phosphine als Ausgangsstoffe III verwendet werden : Tripropyl-, Triisopropyl-, Tributyl-, Triisobutyl-, Tri-sek.-butyl-, Tri-tert.-butyl-phosphin ; bevorzugt Trimethyl-phosphin, Triethyl-phosphin, Triphenyl-phosphin, Tribenzyl-phosphin, Tricyclohexyl-phosphin.

Die Umsetzung wird im allgemeinen bei einer Temperatur von 0 bis 100, vorzugsweise von 40 bis 80 °C, drucklos oder unter Druck, kontinuierlich oder diskontinuierlich durchgeführt. Zweckmäßig verwendet man unter den Reaktionsbedingungen inerte Lösungsmittel. Als Lösungsmittel kommen z. B. in Frage : Wasser ; Ether, z. B. Ethylpropylether, Methyl-tert.-butylether, n-Butylethylether, Di-n-butylether, Diisobutylether, Diethylether, Tetrahydrofuran, Dioxan ; Alkanole und Cycloalkanole wie Ethanol, Methanol, n-Butanol, Isobutanol, tert.-Butanol, n-Propanol, Isopropanol, Amylalkohol, Cyclohexanol, 2-Ethylhexanol, n-Hexanol ; und entsprechende Gemische. Zweckmäßig verwendet man das Lösungsmittel in einer Menge von 400 bis 10 000 Gewichtsprozent, vorzugsweise von 1 000 bis 5 000 Gewichtsprozent, bezogen auf Ausgangsstoff II oder III.

Die Umsetzung wird mit einer vorgenannten Säure, vorteilhaft mit einer Menge von 1 bis 3, insbesondere von 1 bis 2 Äquivalenten Säure, bezogen auf ein Mol Ausgangsstoff II und $—CH_2—OR^6$-Gruppe im Molekül oder 1 Mol Ausgangsstoff V und 1 Mol Formaldehyd durchgeführt.

Beispielsweise sind die folgenden Säuren und dementsprechend die Herstellung der Phosphoniumsalze folgender Säuren geeignet : Chlorsäure, Perchlorsäure, Bromsäure, Jodsäure, Sulfonsäuren wie Methylsulfonsäure, Benzolsulfonsäure, Toluolsulfonsäure ; Tetrafluorborsäure. Als Säuren werden bevorzugt Chlorwasserstoff, Bromwasserstoff, Iodwasserstoff, Perchlorsäure und p-Toluolsulfonsäure eingesetzt.

Die Reaktion kann wie folgt durchgeführt werden : Ein Gemisch von Ausgangsstoff II, Säure und gegebenenfalls Lösungsmittel wird unter guter Durchmischung während 5 bis 17 Stunden bei der Reaktionstemperatur gehalten. Das Gemisch wird dann zweckmäßig eingeengt, der Rückstand mit einem geeigneten Lösungsmittel, z. B. Methanol, aufgenommen und das Gemisch mit einem den Endstoff fällenden Lösungsmittel, z. B. Essigester, versetzt. Der Endstoff wird dann in üblicher Weise, z. B. durch Kristallisation, Filtration und Umkristallisation aus Methanol/Essigester, abgetrennt.

Die nach dem Verfahren der Erfindung herstellbaren Phosphoniumsalze sind wertvolle Ausgangsstoffe für die Herstellung von Farbstoffen, Pharmaka und Schädlingsbekämpfungsmitteln. Bezüglich der Verwendung wird auf die vorgenannte DE-OS verwiesen.

## Beispiel 1

Bei Raumtemperatur wurden unter kräftigem Rühren 152 g (1 mol) 2,4-Dimethyl-6-hydroxymethylphenol und 262 g (1 mol) Triphenylphosphin in 3 000 ml Methanol vorgelegt. Dann ließ man innerhalb von 2 Stunden 300 ml methanolische Salzsäure (6,25 mol/l) zutropfen und das Gemisch 4 Stunden bei 50 °C nachreagieren. Die klare Reaktionslösung wurde eingeengt, der ölige Rückstand in 100 g Methanol

aufgenommen und das Gemisch mit 500 g Essigester/Ether (1 : 1) versetzt.

Man erhielt 260 g (60 % der Theorie) 2-Hydroxy-3,5-dimethyl-benzyltriphenylphosphoniumchlorid vom Fp. 304 °C (Aceton/Methanol).

Beispiel 2

50,4 g (0,3 mol) 2,6-Dihydroxymethyl-4-methylphenol, 157,2 g (0,6 mol) Triphenylphosphin wurden bei Raumtemperatur unter Rühren in 2 500 ml Methanol gelöst. Innerhalb von 2 Stunden ließ man 150 ml (1,3 mol) wäßrige Bromwasserstoffsäure (48 Gew.-%) zutropfen und das Gemisch 15 Stunden bei 50 °C nachrühren. Die klare Lösung wurde eingeengt, der ölige Rückstand in 100 g Methanol aufgenommen und mit 500 g Essigester/Ether (1 : 1) versetzt. Man erhielt 147 g (60 % der Theorie) 4-Methylphenol-2,6-di-(triphenylphosphoniummethyl)-chlorid vom Fp. 270 (Zers.) (Aceton/Methanol).

Beispiel 3

125 g (0,5 mol) 4-Methoxymethyl-2,6-ditert.-butylphenol, 131 g (0,5 mol) Triphenylphosphin wurden in 1 000 ml Methanol vorgelegt. In die Suspension wurden während 2 Stunden 22 g gasförmiger Chlorwasserstoff eingeleitet, wobei die Temperatur von 22 °C auf 45 °C anstieg. Man ließ das Gemisch 15 Stunden bei 50 °C nachrühren und engte ein. Der ölige Rückstand wurde in 100 g Methanol aufgenommen und mit 500 g Essigester/Ether versetzt. Man erhilet 155 g (60 % der Theorie) 4-Hydroxy-3,5-ditert.-butyl-benzyltriphenylphosphoniumchlorid vom Fp. 241 °C (Aceton/Methanol).

Beispiele 4-8

Analog Beispiel 1 (bei Verwendung von HBr Beispiel 2) wurden unter den gleichen Molverhältnissen von Ausgangsstoff II, Triphenylphosphin und Säure die in der Tabelle aufgeführten Ausgangsstoffe umgesetzt. Die Ergebnisse sind in der Tabelle niedergelegt.

| Beisp. Nr. | Menge in g | Ausgangsstoff II $R^4$ | $R^5$ | Endstoff I Stellung der $-CH_2-P(R^3)_3-$ Gruppen | Anion | Fp. in °C | Ausb. in % d.Th. |
|---|---|---|---|---|---|---|---|
| 4 | 95 | $-CH_2OH$ | Br | 2,6 | Cl | 278 | 60 |
| 5 | 627 | $-CH_2OH$ | Br | 2,6 | Br | 247 | 71 |
| 6 | 632 | $-CH_2OH$ | $-CH_2-(CH_2)_6-CH_3$ | 2,6 | Cl | 273 | 69 |
| 7 | 302 | $-CH_2OH$ | $-CH_2-(CH_2)_6-CH_3$ | 2,6 | Br | 298 | 73 |
| 8 | 422 | $-CH_2OH$ | $-CH_2-OH$ | 2,4,6 | Br | 291 | 73 |

Beispiel 9

Die Umsetzung wurde analog Beispiel 1 aber mit 211 g wäßriger Jodwasserstoffsäure (67 Gew.-%) durchgeführt. Man erhielt 400 g 2-Hydroxy-3,5-dimethyl-benzyltriphenylphosphoniumjodid (76,5 % d. Th.) vom Fp. 275 °C (Aceton/Methanol).

Beispiel 10

Die Umsetzung wurde analog Beispiel 1 aber mit 164 g wäßriger Perchlorsäure (70 Gew.-%) durchgeführt. Man erhielt 380 g 2-Hydroxy-3,5-dimethyl-benzyltriphenylphosphoniumperchlorat (76,7 % d. Th.) vom Fp. 233 °C (Aceton/Methanol).

Beispiel 11

244 g (2 Mol) 2,4-Dimethylphenol und 60 g (2 Mol) Paraformaldehyd wurden in 6 000 ml Methanol vorgelegt. Das Gemisch wurde mit wäßriger Natronlauge auf pH = 9 gestellt und 2 Stunden bei 50 °C gerührt. Man versetzte dann mit 542 g (2 Mol) Triphenylphosphin und 844 g 48 %iger Bromwasserstoffsäure (5 Mol) und hielt das Gemisch 16 Stunden bei 50 °C. Die klare Lösung wurde eingeengt, wobei 725 g 2-Hydroxy-3,5-dimethyl-benzyltriphenylphosphoniumbromid vom Fp. 295 °C (Zers.) ausfielen.

**Patentanspruch**

Verfahren zur Herstellung von Hydroxybenzylphosphoniumsalzen der Formel I,

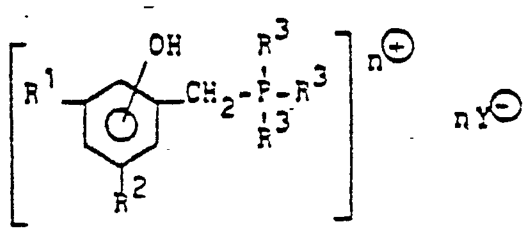

(I)

worin die einzelnen Reste $R^1$, $R^2$ und $R^3$ gleich oder verschieden sein können und jeweils $C_1$-$C_8$-Alkyl, $C_5$- oder $C_6$-Cycloalkyl, $C_7$-$C_{12}$-Aralkyl bzw. Alkylaryl oder Phenyl bedeuten, die unter den Reaktionsbedingungen inerte Substituenten tragen können, $R^1$ und/oder $R^2$ auch jeweils ein Wasserstoffatom, ein Bromatom, ein Chloratom oder den Rest

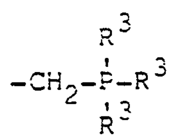

,

worin $R^3$ die vorgenannte Bedeutung besitzt, bezeichnen, Y für das Anion einer Halogenwasserstoffsäure, Perhalogensäure, Sulfonsäure und/oder der Tetrafluorborsäure steht und n 1, 2 oder 3 bedeutet, durch Umsetzung von Phenolderivaten mit Phosphinen, dadurch gekennzeichnet, daß man substituierte Phenole der Formel II,

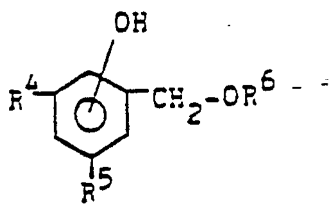

(II)

worin $R^4$ und $R^5$ gleich oder verschieden sein können und jeweils die vorgenannte Bedeutung von $R^1$ und $R^2$ besitzen oder auch, wenn $R^1$ und/oder $R^2$ den Rest

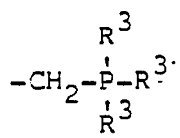

,

bedeuten, jeweils den Rest $-CH_2-OR^6$ bezeichnen können, $R^6$ für ein Wasserstoffatom oder einen $C_1$-$C_4$-Alkylrest steht, mit tertiären Phosphinen der Formel III,

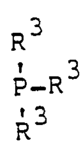

(III)

worin $R^3$ die vorgenannte Bedeutung besitzt, und Säuren der Formel IV,

HY (IV)

worin Y die vorgennante Bedeutung besitzt, umsetzt.

**Claim**

A process for the preparation of hydroxybenzylphosphonium salts of the formula I

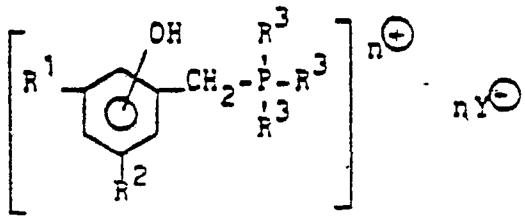

(I)

where the individual radicals $R^1$, $R^2$ and $R^3$ may be identical or different and are each $C_1$-$C_8$-alkyl, $C_5$- or $C_6$-cycloalkyl, $C_7$-$C_{12}$-aralkyl or -alkylaryl, or phenyl, which radicals may bear substituents that are inert under the reaction conditions, and $R^1$ and/or $R^2$ also each denote hydrogen, bromine, chlorine or the radical

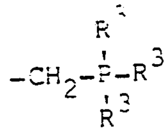 ,

where $R^3$ has the aforementioned meanings, Y is the anion of a halogen hydro acid, perhalogen acid, sulphonic acid and/or tetrafluoroboric acid, and n is 1, 2 or 3, by reacting phenol derivatives with phosphines, wherein a substituted phenol of the formula II

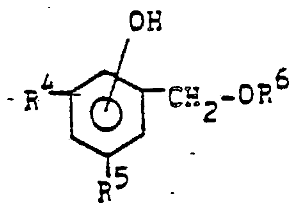

(II)

where $R^4$ and $R^5$ may be identical or different and each has the same meanings as $R^1$ and $R^2$ or, when $R^1$ and/or $R^2$ denote the radical

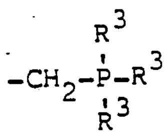 ,

may each be $-CH_2-OR^6$, $R^6$ denoting hydrogen or $C_1$-$C_4$-alkyl, is reacted with a tertiary phosphine of the formula III

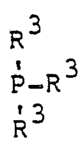

(III)

where $R^3$ has the aforementioned meanings, and an acid of the formula IV

HY (IV)

where Y has the aforementioned meaning.

**Revendication**

Procédé de préparation de sels d'hydroxybenzyl-phosphonium de la formule I

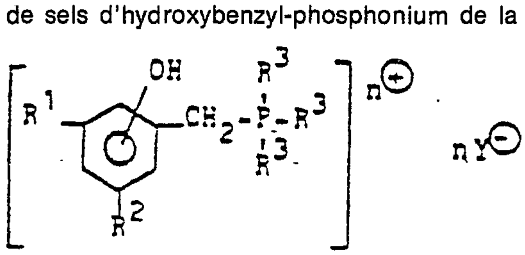

(I)

dans laquelle les divers groupes $R^1$, $R^2$ et $R^3$, qui peuvent être identiques ou différents, désignent chacun un radical alkyle en $C_1$ à $C_8$, un groupe cycloalkyle en $C_5$ ou $C_6$, un groupe aralkyle ou alkylaryle en $C_7$ à $C_{12}$ ou un groupe phényle, qui peuvent porter des substituants inertes dans les conditions réactionnelles, $R^1$ et(ou) $R^2$ pouvant en outre représenter un atome d'hydrogène, un atome de brome ou un atome de chlore ou un groupe

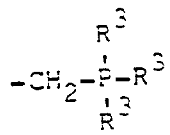 ,

dans lequel $R^3$ possède la signification définie, Y représente l'anion d'un acide halohydrique, d'un acide perhalogéné, d'un acide sulfonique et(ou) de l'acide tétrafluoroborique et n vaut 1, 2 ou 3, par réaction de dérivés du phénol avec des phosphines, caractérisé en ce que l'on fait réagir des phénols substitués de la formule II

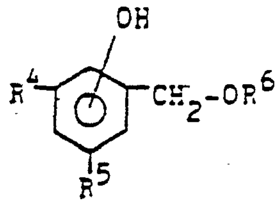 (II)

dans laquelle $R^4$ et $R^5$, qui peuvent être identiques ou différents, peuvent posséder la signification définie ci-dessus pour $R^1$ et $R^2$ ou, lorsque $R^1$ et(ou) $R^2$ représente(nt) un groupe

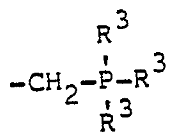 ,

désigner chacun un groupe $-CH_2-OR^6$, dans lequel $R^6$ désigne un atome d'hydrogène ou un radical alkyle en $C_1$ à $C_4$, avec des phosphines tertiaires de la formule III

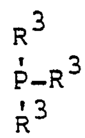 (III)

dans laquelle $R^3$ possède la signification définie plus haut, et des acides de la formule IV

HY (IV)

dans laquelle Y possède la signification définie.